# EUROPEAN PATENT SPECIFICATION

(11) **EP 4 657 598 B1**
(45) Date of publication and mention of the grant of the patent: **10.06.2026**
(21) Application number: 25179591.0
(22) Date of filing: 28.05.2025
(51) Int. Cl.: H01M 10/06, H01M 10/42, H01M 10/44, H02J 7/00, H02J 7/90

(54) **METHOD AND SYSTEM FOR DESULFATING LEAD-ACID BATTERIES, AND ELECTRIC MOTOR VEHICLE COMPRISING SUCH SYSTEM**
VERFAHREN UND SYSTEM ZUR DESULFATIERUNG VON BLEISÄUREBATTERIEN UND ELEKTRISCHES KRAFTFAHRZEUG MIT SOLCH EINEM SYSTEM
PROCÉDÉ ET SYSTÈME DE DÉSULFATATION DE BATTERIES AU PLOMB-ACIDE, ET VÉHICULE À MOTEUR ÉLECTRIQUE COMPRENANT UN TEL SYSTÈME

(30) Priority: 31.05.2024 EP 24179358
(43) Date of publication of application: 03.12.2025
(73) Proprietor: VOLVO TRUCK CORPORATION, 405 08 Göteborg (SE)
(72) Inventor: De Brito, David, 38230 Charvieu Chavagneux (FR); Colliot, Caroline, 69330 Jonage (FR); Valero, Maxime, 69330 Meyzieu (FR)
(74) Representative: Lavoix

(56) References cited:
- WO-A2-2011/005944
- CN-A- 104 753 146
- ES-T3- 2 460 719

## Description

### TECHNICAL FIELD

The disclosure relates generally to the field of batteries. In particular aspects, the disclosure relates to a method and a system for desulfating lead-acid batteries, and to an electric motor vehicle comprising such system.

The use of lead-acid batteries, e.g. 12V lead-acid batteries, is widely spread in the market, for example as a power source onboard of motor vehicles.

During their operational life, such batteries are subject to degradation due to the unavoidable process of sulfation.

In particular, sulfate crystals form on the lead plates of the battery damaging the battery or in any case diminishing its performance.

In order to cope with such negative effects of sulfation, there have been developed some processes for desulfating lead-acid batteries. However, these known processes have still some aspects worth of further improvements, in particular in terms of efficiency and efficacy. Prior art documents ES2460719T3 and CN104753146 describe methods for de-sulfating of Pb-acid batteries.

### SUMMARY

According to a first aspect of the disclosure, there is provided a method for at least partially desulfating a lead-acid battery, comprising applying to the at least one lead-acid battery a series of current pulses formed by positive current pulses alternating with negative current pulses, wherein the alternating positive and negative current pulses are applied to the lead-acid battery with a separating time between consecutives pulses that is below a predefined time. This aspect of the disclosure may seek to properly and efficiently desulfate the lead-acid battery. A technical benefit may include rendering desulfation more effective since sulfate crystals are impacted in "two different directions" by positive current pulses alternating with negative current pulses.

Optionally in some examples, including in at least one preferred example, the separating time T between consecutive current pulses is selectively adjustable. A technical benefit may include suitably setting the time needed for the desulfation.

Optionally in some examples, including in at least one preferred example, the alternating negative and positive current pulses are continuously applied to the at least one lead-acid battery with the separating time between consecutives pulses being set equal to zero. In other words, the alternating negative and positive current pulses are continuously applied to the at least one lead-acid battery without a rest time between the pulses.

A technical benefit may include reducing the time needed for the desulfation process since no resting times are foreseen between consecutive pulses and rendering desulfation more effective since sulfate crystals are impacted in "two different directions" by positive current pulses alternating with negative current pulses.

Optionally in some examples, including in at least one preferred example, the method comprises adjusting the duration of one or more positive and/or negative pulses of the series of current pulses. A technical benefit may include better adapting the current pulses to the specific battery to be desulfated.

Optionally in some examples, including in at least one preferred example, the duration of at least one positive and/or negative current pulse of the series of current pulses is different from duration of the other positive and/or negative current pulses of the series of current pulses. A technical benefit may include better adapting the current pulses to the specific battery to be desulfated, rendering more efficient the desulfation process since lead sulfate crystals of different sizes can be more effectively stimulated and desolved or broken, depending on the duration of each pulse, be it shorter or longer.

Optionally in some examples, including in at least one preferred example, the method comprises adjusting the maximum current value of one or more positive and/or negative pulses of the series of current pulses. A technical benefit may include better adapting the current pulses to the specific battery to be desulfated, rendering more efficient the desulfation process due to the selected intensity of the current pulses.

Optionally in some examples, including in at least one preferred example, the positive pulses have substantially the same maximum current absolute value. A technical benefit may include adapting even more the current pulses to the specific battery to be desulfated, rendering even more efficient the desulfation process due to the selected intensity of the current pulses.

Optionally in some examples, including in at least one preferred example, the negative pulses have substantially the same maximum current absolute value. A technical benefit may include adapting even more the current pulses to the specific battery to be desulfated, rendering even more efficient the desulfation process due to the selected intensity of the current pulses.

Optionally in some examples, including in at least one preferred example, the positive and negative pulses have substantially the same maximum current absolute value. A technical benefit may include providing the battery with a mean energy approximately equal to 0Wh, thus avoiding charging the battery.

Optionally in some examples, including in at least one preferred example, the positive pulses have the same maximum current absolute value, and the negative pulses have the same maximum current absolute value, and wherein the maximum current absolute value of the positive pulses is different from the maximum current absolute value of the negative pulses. A technical benefit may include adapting even more the current pulses to the specific battery to be desulfated, letting more positive or negative current flows through the battery.

Optionally in some examples, including in at least one preferred example, the maximum current absolute value of at least one positive and/or negative current pulse of the series of current pulses is different from the maximum current absolute value of the other positive and/or negative current pulses of the series of current pulses. A technical benefit may include adapting even more the current pulses to the specific battery to be desulfated, rendering even more efficient the desulfation process due to the selected intensity of the current pulses.

Optionally in some examples, including in at least one preferred example, the at least one lead-acid battery is a battery of a motor vehicle, and the series of current pulses formed by positive current pulses alternating with negative current pulses are applied while keeping the at least one lead-acid battery installed onboard the motor vehicle. A technical benefit may include effecting the desulfation of the lead-acid battery without having to dismantle it, thus making substantially easier and cheaper the maintenance intervention for regenerating the battery.

Optionally in some examples, including in at least one preferred example, the at least one lead-acid battery comprises a plurality of lead-acid batteries, and the series of current pulses formed by positive current pulses alternating with negative current pulses are applied for desulfating at the same time two or more lead-acid batteries of said plurality of lead-acid batteries. A technical benefit may include effecting the desulfation of two or more lead-acid batteries at the same time without having to dismantle them, thus making even further easier and cheaper the maintenance intervention for regenerating the batteries.

Optionally in some examples, including in at least one preferred example, the plurality of lead acid batteries are batteries of a motor vehicle, and the series of current pulses for desulfating are applied while keeping them installed onboard the motor vehicle. A technical benefit may include effecting the desulfation of the lead-acid batteries without having to dismantle them, thus making substantially easier and cheaper the maintenance intervention for regenerating the battery.

According to a second aspect of the disclosure, there is provided a system for at least partially desulfating at least one lead-acid battery, comprising at least:
- at least one power source suitable to provide electric current;
- a controller which is configured to perform a desulfation method according to any of the examples above mentioned, using electric current provided by the at least one power source. This second aspect of the disclosure may seek to properly and efficiently desulfate the lead-acid battery. A technical benefit may include rendering desulfation more effective since sulfate crystals are impacted in "two different directions" by positive current pulses alternating with negative current pulses. It should be understood that the system may be a system onboard a vehicle or a system in an off-board rig, the latter would require demounting the at least one lead-acid battery before connecting it to the off-board rig.

Optionally in some examples, including in at least one preferred example, the at least one lead-acid battery is a battery of a motor vehicle and the controller is configured to perform said desulfation method according to a predetermined schedule. A technical benefit may include properly scheduling desulfation thereby avoiding for example that any malfunction of the battery may cause a motor vehicle to run out of power.

Optionally in some examples, including in at least one preferred example, the controller is configured to perform a desulfation method according to a predetermined schedule when the motor vehicle is at stand-still with the at least one lead-acid battery kept installed onboard the motor vehicle. A technical benefit may include effecting the desulfation of the lead-acid batteries according to a predetermined schedule and without having to dismantle or demounting them from the vehicle, thus making substantially easier and cheaper the maintenance intervention for regenerating the battery.

Optionally in some examples, including in at least one preferred example, wherein the at least one lead-acid battery is a battery of a motor vehicle and the controller is configured to perform said desulfation method based on a signal provided by a sensor indicative that a current State-of-Health, SOH, of the at least lead-acid battery is below a predetermined threshold. A technical benefit may include alerting in advance that desulfation is needed thereby avoiding for example that any malfunction of the battery may cause a motor vehicle to run out of power. Furthermore, this may prolong the lifetime of the battery by desulfating the battery when needed.

Optionally in some examples, including in at least one preferred example, the controller is configured to perform said desulfation method based on the provided signal when the motor vehicle is at stand-still with the at least one lead-acid battery kept installed onboard of the motor vehicle. A technical benefit may include alerting in advance that desulfation of the lead-acid battery is needed and then executing it when the motor vehicle is for example parked and without having to dismantle the battery(ies) to be desulfated. This would allow for desulfation at a certain intervals during normal operation such as during at least part of the parked sessions, when the parked sessions are determined long enough or at certain parked sessions, e.g. when the vehicle is parked at a maintenance service center.

Optionally in some examples, including in at least one preferred example, the at least one power source forms or is part of a first power network installed onboard of the motor vehicle, the first power network providing DC electric current at a first predetermined voltage and is suitable for being used at least for traction of the motor vehicle. A technical benefit may include exploiting a power system already onboard the motor vehicle as a source of current for desulfating the battery(ies).

Optionally in some examples, including in at least one preferred example, the at least one lead-acid battery forms or is part of a second power network installed onboard of the motor vehicle, and provides DC electric current at a second predetermined voltage which is lower than said first predetermined voltage and is suitable for supplying one or more power consumers installed onboard of the motor vehicle, and the system further comprises at least one DC/DC converter which converts the DC electric current provided by the first power network into DC electric current having a lower voltage suitable for being applied to the at least one lead acid battery. A technical benefit may include properly controlling and regulating the DC current to be applied for desulfating the battery(ies).

Optionally in some examples, including in at least one preferred example, the system further comprises a Human-Machine-Interface which is suitable to be installed onboard of the motor vehicle and alerts a driver of the motor vehicle when said desulfation method has to be carried out or is planned to be carried out. A technical benefit may include alerting for, or scheduling in advance, the desulfation to be carried out.

Optionally in some examples, including in at least one preferred example, the controller is part of the main electronic control unit (ECU) of the motor vehicle. A technical benefit may include exploiting a component already onboard the motor vehicle which is also used for other purposes.

Optionally in some examples, including in at least one preferred example, the controller is installed onboard the motor vehicle and is in operative communication with the main electronic control unit (ECU) of the motor vehicle. A technical benefit may include exploiting a component onboard the motor vehicle.

Optionally in some examples, including in at least one preferred example, the whole system is substantially entirely installed onboard a motor vehicle. A technical benefit may include having the possibility for a driver to carry out desulfation of the battery(ies) in an autonomous way.

Optionally in some examples, including in at least one preferred example, the at least one lead-acid battery comprises a plurality of lead-acid batteries, and wherein the controller is configured to perform said desulfation method for desulfating at the same time two or more lead-acid batteries of said plurality of lead-acid batteries using electric current provided by the at least one power source. A technical benefit may include effecting the desulfation of two or more lead-acid batteries at the same time without having to dismantle them, thus making even further easier and cheaper the maintenance intervention for regenerating the batteries.

Optionally in some examples, including in at least one preferred example, the plurality of lead acid batteries are batteries of a motor vehicle, and the series of current pulses for desulfating are applied while keeping them installed onboard the motor vehicle. A technical benefit may include effecting the desulfation of the lead-acid batteries without having to dismantle them, thus making substantially easier and cheaper the maintenance intervention for regenerating the batteries.

According to a third aspect of the disclosure, there is provided an electric motor vehicle comprising one or more lead-acid batteries, and a system according to any of the above examples for at least partially desulfating at least one of the one or more lead-acid batteries.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawing(s).
FIG. 1 is a graph schematically illustrating an exemplary series of current pulses applicable by a method for at least partially desulfating at least one lead-acid battery, according to the present disclosure;
FIG. 2 is a graph schematically illustrating another exemplary series of current pulses applicable by a method for at least partially desulfating at least one lead-acid battery, according to the present disclosure;
FIG. 3 is a block diagram schematically illustrating an exemplary system for at least partially desulfating at least one lead-acid battery;
FIG. 4 is a block diagram schematically illustrating an exemplary system for at least partially desulfating at least one lead-acid battery which can be installed onboard a motor vehicle.

### DETAILED DESCRIPTION

The detailed description set forth below provides information and examples of the disclosed technology with sufficient detail to enable those skilled in the art to practice the disclosure.

Current procedures and methods for desulfating batteries are not entirely effective and efficient. The method and system according to the present disclosure allow optimizing the time needed to desulfate and thus regenerate batteries, and ameliorating also the efficacy thanks to the different pulses applied to the battery with more lead sulfate crystals being removed. In addition, the method and system according to the present disclosure may be used without dismantling the battery(ies) installed onboard of a motor vehicle.

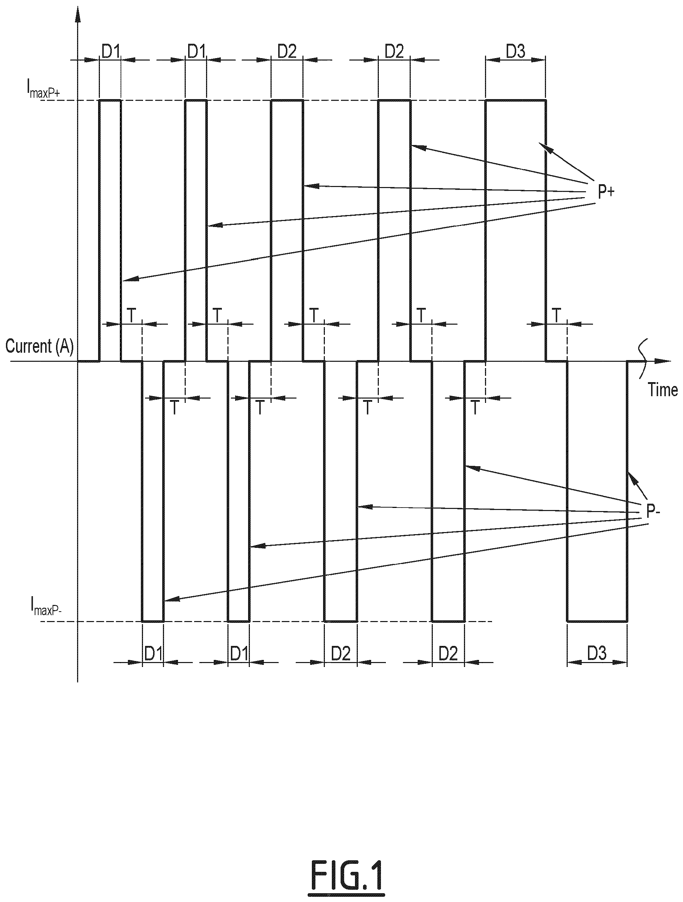

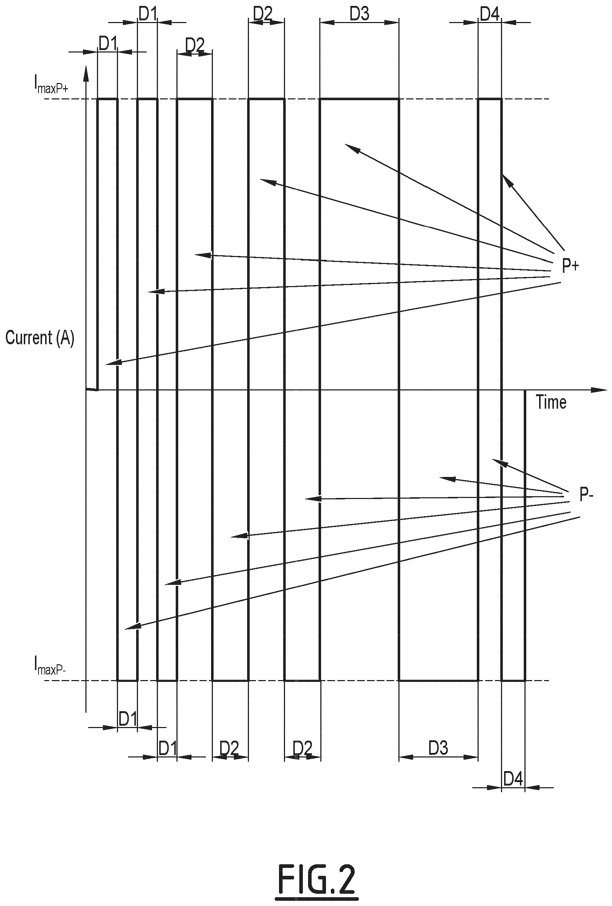

FIG. 1 and FIG. 2 are graphs schematically illustrating exemplary series of current pulses applicable by a method for at least partially desulfating at least one lead-acid battery, according to the present disclosure.

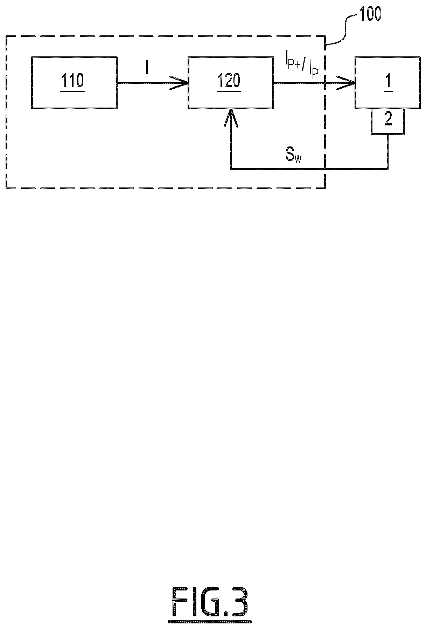

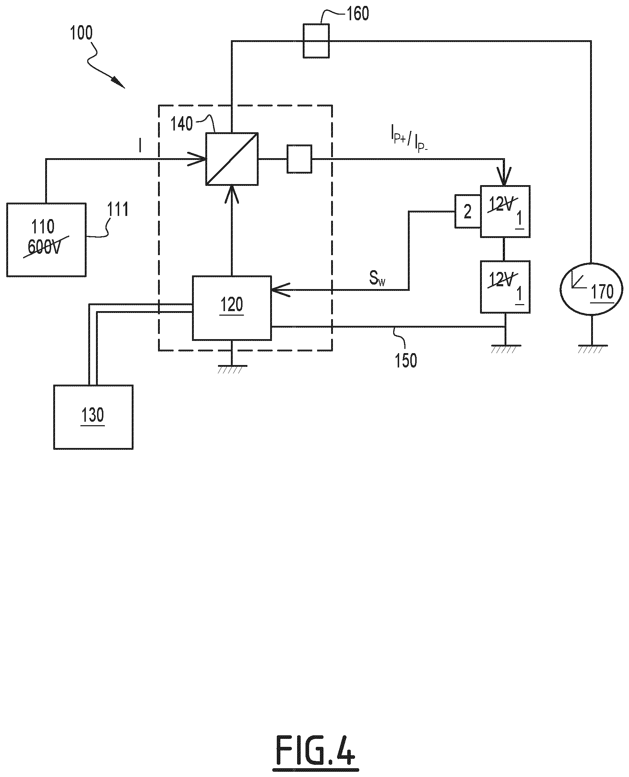

More in details, a method according to the disclosure for at least partially desulfating at least one lead-acid battery, schematically illustrated in FIG. 3 and 4 by the reference number 1, comprises applying to the at least one battery 1 a series of current pulses formed by positive current pulses (P+) alternating with negative current pulses (P-), wherein, as illustrated in FIG. 1, the alternating negative and positive current pulses are applied to the at least one lead-acid battery 1 with a separating time T between consecutives pulses that is below a predefined time.

In one possible aspect, the separating time T between consecutive current pulses is selectively adjustable.

In one possible aspect, as illustrated in FIG. 2, the alternating negative and positive current pulses are continuously applied to the at least one lead-acid battery 1 with the separating time T between consecutives pulses that is set equal to zero.

Clearly, the value of such separating time T, being positive or zero, can be suitably selected depending on the specific applications.

For example, the separating time T may vary in time during a sequence, it may be longer in the beginning and shorter at the end and vice versa, it may also be fixed during the desulfation sequence. The value(s) selected for the separating time T will affect the overall time for the desulfation method. Hence when more time is available (for example during longer parking or maintenance times), the separating time T may be selected to be longer. When time for leaving the vehicle parked or under maintenance is shorter, then a shorter or no rest time between pulses may be seletected, thereby injecting more pulses over the total time available for desulfation, thereby obtaining a "better" desulfation.

An exemplary series of current pulses applicable by a method according to the present disclosure to at least one lead-acid battery 1 is schematically represented in FIG. 1, where a positive separating time T is selected, and in FIG. 2 where a separating time T equal to zero is selected.

The series of current pulses may be applied to the battery for a total predetermined interval of time, which can be selectively adapted based on the applications.

For example, the total interval of time can be set to last from few to many hours.

In one possible aspect, the method according to the disclosure comprises adjusting the respective duration of one or more positive and/or negative pulses of the series of current pulses.

In one possible aspect, the time duration of at least one positive current pulse P+ and/or negative current pulse P- of the series of current pulses is different from the time duration of the other positive and/or negative current pulses P+, P- of the series of current pulses.

In particular, the method according to the present disclosure offers a wide flexibility since it is possible for example to:
- set a desired time duration equal for all pulses;
- set a first desired time duration equal for all positive pulses P+, and a second desired time duration equal for all negative pulses P-;
- set any desired number of different time durations for the various pulses along the series.

For instance, in the exemplary series illustrated in FIG. 1 and in FIG. 2 (counting from the origin of and along the horizontal axis Time):
- the first two positive pulses P+ illustrated have substantially the same time duration D₁, the first negative current pulse P- there between, and also the second negative current pulse P- have substantially the same time duration D₁;
- the third and fourth positive pulses P+ illustrated have the same time duration D₂, for example longer than the first time duration D₁, and the third negative current pulse P-(applied between the third and fourth positive pulses P+) and the fourth negative current pulse P- (which follows immediately after the fourth positive pulses P+) have the same time duration D₂;
- the fifth positive pulse P+ (which follows immediately after the fourth negative pulses P+) has a time duration D₃, for example longer than the second time duration D₂, and the fifth negative pulse P- (which follows immediately after the fifth positive pulses P+) has substantially the same time duration D₃;
- the sixth positive pulse P+, which is illustrated for the sake of simplicity only in FIG. 2 and that follows immediately after the fifth negative pulses P+, has a time duration D₄, and the sixth negative pulse P-, also illustrated for the sake of simplicity in FIG. 2 and which follows immediately after the sixth positive pulses P+, has substantially the same time duration D₄.

For example, the same time duration D₄ can be shorter than the time duration D₃, e.g. it can be substantially equal to the time duration D₁.

The various duration times can vary for example from a few tens milliseconds (ms) to few hundreds milliseconds (ms), e.g. D1 can last about 50ms and D3 can last 500ms.

In one possible example, the method according to the present disclosure comprises adjusting the maximum current value Iₘₐₓ of one or more positive and/or negative pulses P+, P- of the series of current pulses.

In one possible aspect, the positive pulses P+ have substantially the same maximum current absolute value, indicated in FIG. 1 along the y-axis by the reference I_{maxP+}.

In one possible aspect, I_{maxP+}, the negative pulses P- have substantially the same maximum current absolute value indicated in FIG. 1 along the y-axis by the reference I_{maxP-}.

In one possible aspect, and as illustrated in FIG. 1, the positive and negative pulses P+, P- have substantially the same maximum current absolute value I_{maxP+}, I_{maxP-} (i.e. the maximum current intensity of the positive pulses is equal to the inverse of the maximum current value of the negative pulses).

In yet another possible aspect, the positive pulses have the same maximum current absolute value I_{maxP+}, and the negative pulses have the same maximum current absolute value I_{maxP-}, wherein the maximum current absolute value I_{maxP+} of the positive pulses P+ is different from the maximum current absolute value I_{maxP-} of the negative pulses P- (i.e. the maximum current intensity of the positive pulses is different from the inverse of the maximum current value of the negative pulses).

In a further possible aspect, the maximum current absolute value Iₘₐₓ of at least one positive and/or negative current pulse of the series of current pulses is different from the maximum current absolute value Iₘₐₓ of the other positive and/or negative current pulses of the series of current pulses.

The various maximum intensities of the current pulses may vary for example from 400A to 600 A.

In one possible aspect, the at least one lead-acid battery 1 is a battery of a motor vehicle, and the series of current pulses formed by positive current pulses alternating with negative current pulses are applied for desulafting such battery while keeping it installed onboard the motor vehicle.

In one possible aspect, the at least one lead-acid battery 1 comprises a plurality of lead-acid batteries 1, and the series of current pulses formed by positive current pulses alternating with negative current pulses are applied for desulfating at the same time two or more lead-acid batteries 1 of the plurality of lead-acid batteries 1.

In one possible example, the plurality of lead acid batteries are batteries of a motor vehicle, and the series of current pulses for desulfating are applied while keeping them installed onboard the motor vehicle.

FIG. 3 is a block diagram schematically illustrating an exemplary system for at least partially desulfating at least one lead-acid battery 1, therein indicated by the overall reference number 100.

As illustrated, the system 100 comprises:
- at least one power source 110 suitable to provide electric current;
- a controller 120 which carries out or causes carrying out a desulfation method according to one or more of the aspects above indicated using and suitably regulating the electric current provided by the at least one power source 110.

In one possible aspect, the at least one lead-acid battery 1 is a battery of a motor vehicle and the controller 120 carries out or causes carrying out the disclosed desulfation method according to a predetermined schedule.

In one possible aspect, the controller 120 carries out or causes carrying out the disclosed desulfation method according to a predetermined schedule when the motor vehicle is at stand-still with the at least one lead-acid battery 1 kept installed onboard the motor vehicle.

In one possible aspect, the at least one lead-acid battery 1 is a battery of a motor vehicle and the controller 120 carries out or causes carrying out the desulfation method based on a signal Sw provided by a sensor 2 indicative that a current State-of-Health, SOH, of the at least lead-acid battery 1 is below a predetermined threshold.

In practice, the signal Sw is a warning signal that alerts about the SOH of the at least one battery 1.

In one possible aspect, the controller 120 carries out or causes carrying out the desulfation method based on the signal Sw provided by the sensor 2 when the motor vehicle is at stand-still with the at least one lead-acid battery 1 kept installed onboard of the motor vehicle.

In one possible embodiment, the at least one power source 110 forms or is part of a first power network which is installed onboard of the motor vehicle and provides DC electric current at a first predetermined voltage that is suitable for being used at least for traction of the motor vehicle.

For instance, the first power network is a 600V DC network supplying the traction features of the motor vehicle.

In one possible aspect, the at least one lead-acid battery 1 forms or is part of a second power network which is installed onboard of the motor vehicle and provides DC electric current at a second predetermined voltage which is lower than the first predetermined voltage.

For example, the second power network is suitable for supplying one or more power consumers installed onboard of the motor vehicle, such as auxiliary loads schematically represented in Fig. 4 by the reference number 170, and the electronic main control unit (ECU) of the motor vehicle.

For example, the second power network may comprise a plurality of LV lead-acid batteries, e.g. two 12V batteries 1 which forms a 24 V DC network.

In one possible embodiment, as schematically illustrated in FIG. 4, the controller 120 is part of the main electronic control unit (ECU) of the motor vehicle.

As illustrated in FIG. 4, the controller 120 may be connected to and supplied by the second power network, and in particular by at least one lead-acid battery 1, via a bus 150.

In one possible embodiment, the controller 120 is installed onboard the motor vehicle and is in operative communication with the main electronic control unit (ECU) of the motor vehicle.

The controller 120 is adapted for example to execute instructions from a computer-readable medium to perform any of the functions or processing described herein. While the controller 120 is represented in FIG. 3 and FIG.4 by a single box, it may include any collection of devices that individually or jointly execute a set (or multiple sets) of instructions to perform any of the functions or processing discussed herein. Accordingly, any reference in the disclosure and/or claims to a controller or equivalently to an electronic controller or electronic control unit (ECU), etc., includes reference to one or more such devices to individually or jointly execute a set (or multiple sets) of instructions to perform such functions or processing.

In particular, the controller 120 may comprise at least one computing device or electronic device capable of including firmware, hardware, and/or executing software instructions to implement the functionality/processing described herein. The controller 120 may include processing circuitry (e.g., processing circuitry including one or more processor devices or control units), a memory, such as the data storage. The processing circuitry may include any number of hardware components for conducting data or signal processing or for executing computer code stored in a memory. The processing circuitry may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry may further include computer executable code that controls operation of the programmable device.

In one possible aspect, the system 100 further comprises at least one DC/DC converter, schematically indicated in FIG. 4 by the reference number 140 which converts the DC electric current provided by the first power network into DC electric current having a lower voltage suitable for being applied to the at least one lead acid battery 1 for desulfation thereof.

In one possible aspect, the system 100 further comprises a Human-Machine-Interface, schematically indicated in FIG 4 by the reference number 130, which is suitable to be installed onboard of the motor vehicle and is configured to alert a driver of the motor vehicle when said desulfation method 1 has to be carried out or is planned to be carried out.

In one possible aspect, the Human-Machine-Interface 130 may feature a menu for a driver to interactively define a suitable time for launching the execution of the desulfation method.

In one possible aspect, the system 100 comprises at least one protective filter, schematically indicated in FIG. 4 by the reference number 160, for protecting one or more of the electric loads, such as the loads 170, installed onboard the motor vehicle.

The at least one protective filter 160 may be positioned for example between the converter 140 and the one or more loads 170.

In one possible aspect, the system 100 is substantially entirely installed onboard a motor vehicle.

In one possible embodiment, the at least one lead-acid battery 1 comprises a plurality of lead-acid batteries, and the controller 120 carries out or causes carrying out the desulfation method for desulfating at the same time two or more lead-acid batteries of the plurality of lead-acid batteries using electric current provided by the at least one power source 110.

In FIG. 4, for the sake of ease of illustration there are represented only two lead-acid batteries. However, any suitable number of batteries can be installed on board of the motor vehicle and two or more of them may be simultaneously desulfated.

Further, there is illustrated only one sensor 2 associated to one of the lead-acid battery 1.

Clearly, a sensor 2 can be associated to each of the batteries 1.

In particular, the system 100 can be installed and used onboard of any suitable electric motor vehicle comprising one or more lead-acid batteries 1 that during their operative life may need to be subject to the desulfation method according to the disclosure.

Hence, the present disclosure provides at least the following examples
**Example 1:** A method for at least parially desulfating at least one lead-acid battery 1, comprising applying to the at least one lead-acid battery 1 a series of current pulses formed by positive current pulses alternating with negative current pulses, wherein the alternating positive and negative current pulses are applied to the lead-acid battery with a separating time T between consecutives pulses that is below a predefined time.
**Example 2:** The method of example 1, wherein the separating time T between consecutive current pulses is selectively adjustable.
**Example 3:** The method of any of examples 1-2, wherein the alternating negative and positive current pulses are continuously applied to the at least one lead-acid battery 1 with the separating time T between consecutives pulses being set equal to zero.
**Example 4:** The method of any of examples 1-3, comprising adjusting the duration of one or more positive and/or negative current pulses of the series of current pulses.
**Example 5:** The method of any of examples 1-4, wherein duration of at least one positive and/or negative current pulse of the series of current pulses is different from duration of the other positive and/or negative current pulses of the series of current pulses.
**Example 6:** The method of any of examples 1-5, comprising adjusting the maximum current value Iₘₐₓ of one or more positive and/or negative current pulses P+, P- of the series of current pulses.
**Example 7:** The method of any of examples 1-6, wherein the positive current pulses P+ have substantially the same maximum current absolute value I_{maxP+}.
**Example 8:** The method of any of examples 1-7, wherein the negative current pulses P- have substantially the same maximum current absolute value I_{maxP-}.
**Example 9:** The method of any of examples 1-8, wherein the positive and negative pulses P+, P- have substantially the same maximum current absolute value I_{maxP+}, I_{maxP-}.
**Example 10:** The method of any of examples 1-8, wherein the positive current pulses P+ have the same maximum current absolute value I_{maxP+} and the negative current pulses P+ have the same maximum current absolute value I_{maxP-}, and wherein the maximum current absolute value I_{maxP+} of the positive current pulses P+ is different from the maximum current absolute value I_{maxP-} of the negative current pulses P-.
**Example 11:** The method of any of examples 1-6, wherein the maximum current absolute value Iₘₐₓ of at least one positive and/or negative current pulse of the series of current pulses is different from the maximum current absolute value Iₘₐₓ of the other positive and/or negative current pulses of the series of current pulses.
**Example 12:** The method of any of examples 1-11, wherein the at least one lead-acid battery 1 is a battery of a motor vehicle, and wherein said series of current pulses formed by positive current pulses alternating with negative current pulses are applied while keeping the at least one lead-acid battery 1 installed onboard the motor vehicle.
**Example 13:** The method of any of examples 1-12, wherein the at least one lead-acid battery 1 comprises a plurality of lead-acid batteries, and wherein said series of current pulses formed by positive current pulses alternating with negative current pulses are applied for desulfating at the same time two or more lead-acid batteries of said plurality of lead-acid batteries.
**Example 14:** A system 100 for at least partially desulfating at least one lead-acid battery 1, comprising at least:
   - at least one power source 110 suitable to provide electric current;
   - a controller 120 which is configured to perform a desulfation method according to any of examples 1-13 using electric current provided by the at least one power source 110.
**Example 15:** The system 100 of example 14, wherein the at least one lead-acid battery 1 is a battery of a motor vehicle and the controller 120 is configured to perform said desulfation method according to a predetermined schedule.
**Example 16:** The system 100 of any of example 15, wherein the controller 120 is configured to perform said desulfation method according to a predetermined schedule when the motor vehicle is at stand-still with the at least one lead-acid battery 1 kept installed onboard the motor vehicle.
**Example 17:** The system 100 of example 13, wherein the at least one lead-acid battery 1 is a battery of a motor vehicle and the controller 120 is configured to perform said desulfation method based on a signal Sw provided by a sensor 2 indicative that a current State-of-Health, SOH, of the at least lead-acid battery 1 is below a predetermined threshold.
**Example 18:** The system 100 of any of example 17, wherein the controller 120 is configured to perform said desulfation method based on the provided signal Sw when the motor vehicle is at stand-still with the at least one lead-acid battery 1 kept installed onboard of the motor vehicle.
**Example 19:** The system 100 of any of examples 14-18, wherein the at least one power source 110 forms or is part of a first power network installed onboard of the motor vehicle, the first power network providing DC electric current at a first predetermined voltage and is suitable for being used at least for traction of the motor vehicle.
**Example 20:** The system 100 of example 19, wherein the at least one lead-acid battery 1 forms or is part of a second power network installed onboard of the motor vehicle, the second power network providing DC electric current at a second predetermined voltage which is lower than said first predetermined voltage and is suitable for supplying one or more power consumers 120, 170 installed onboard of the motor vehicle, and wherein the system 100 further comprises at least one DC/DC converter 140 which converts the DC electric current provided by the first power network into DC electric current having a lower voltage suitable for being applied to the at least one lead acid battery 1.
**Example 21:** The system 100 of any of examples 14-20, further comprising a Human-Machine-Interface 130 which is suitable to be installed onboard of the motor vehicle and alerts a driver of the motor vehicle when said desulfation method has to be carried out or is planned to be carried out.
**Example 22:** The system 100 of any of examples 14-21, wherein the controller 120 is part of or is installed onboard the motor vehicle and in operative communication with the main electronic control unit of the motor vehicle.
**Example 23:** The system 100 of any of examples 14-22, wherein the system 100 is substantially entirely installed onboard a motor vehicle.
**Example 24:** The system 100 of any of examples 14-23, further comprising at least one filter 160 for protecting one or more electric loads installed onboard the motor vehicle.
**Example 25:** The system 100 of any of examples 14-24, wherein the at least one lead-acid battery 1 comprises a plurality of lead-acid batteries, and wherein the controller 120 carries out or causes carrying out said desulfation method for desulfating at the same time two or more lead-acid batteries of said plurality of lead-acid batteries using electric current provided by the at least one power source 110.
**Example 26:** An electric motor vehicle comprising:
   - one or more lead-acid batteries 1; and
   - a system 100 for at least partially desulfating at least one of said one or more lead-acid batteries 1 according to any of examples 14-25.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

For example, when the term "approximately", or "about", or "substantial", or "substantially" is used herein, it has to be understood as encompassing an actual variation of plus or minus 5% with respect to a reference value.

It is to be understood that the present disclosure is not limited to the aspects described above and illustrated in the drawing; rather, the skilled person will recognize that many changes and modifications may be made within the scope of the present disclosure and appended claims. In the drawing and description, there have been disclosed aspects for purposes of illustration only and not for purposes of limitation, the scope of the disclosure being set forth in the following claims. It should also be noted that in order to clearly and concisely describe the present disclosure, the drawing may not necessarily be to scale and certain features of the disclosure may be shown in somewhat schematic form.

## Claims

1. A desulfation method for at least partially desulfating at least one lead-acid battery (1), comprising applying to the at least one lead-acid battery (1) a series of current pulses formed by positive current pulses alternating with negative current pulses, wherein the alternating positive and negative current pulses are applied to the lead-acid battery with a separating time (T) between consecutives pulses that is below a predefined time.

2. The desulfation method according to claim 1, wherein the separating time (T) between consecutive current pulses is selectively adjustable.

3. The desulfation method according to any of claims 1-2, wherein the alternating negative and positive current pulses are continuously applied to the at least one lead-acid battery (1) with the separating time (T) between consecutives pulses being set equal to zero.

4. The desulfation method according to any of claims 1-3, comprising adjusting the duration of one or more positive and/or negative current pulses of the series of current pulses.

5. The desulfation method according to any of claims 1-4, wherein duration of at least one positive and/or negative current pulse of the series of current pulses is different from duration of the other positive and/or negative current pulses of the series of current pulses.

6. The desulfation method according to any of claims 1-5, comprising adjusting the maximum current value (Iₘₐₓ) of one or more positive and/or negative current pulses (P+; P-) of the series of current pulses.

7. The desulfation method according to any of claims 1-6, wherein the positive current pulses (P+) have substantially the same maximum current absolute value (I_{maxP+}) and/or the negative current pulses (P-) have substantially the same maximum current absolute value (I_{maxP}).

8. A system (100) for at least partially desulfating at least one lead-acid battery (1), comprising at least:
- at least one power source (110) suitable to provide electric current;
- a controller (120) which is configured to perform a desulfation method according to any of claims 1-7 using electric current provided by the at least one power source (110).

9. The system (100) of claim 8, wherein the at least one lead-acid battery (1) is a battery of a motor vehicle and the controller (120) is configured to perform said desulfation method according to a predetermined schedule.

10. The system (100) of claim 9, wherein the controller (120) is configured to perform said desulfation method according to a predetermined schedule when the motor vehicle is at stand-still with the at least one lead-acid battery (1) kept installed onboard the motor vehicle.

11. The system (100) of claim 8, wherein the at least one lead-acid battery (1) is a battery of a motor vehicle and the controller (120) is configured to perform said desulfation method based on a signal (Sw) provided by a sensor (2) indicative that a current State-of-Health, SOH, of the at least lead-acid battery (1) is below a predetermined threshold.

12. The system (100) of claim 11, wherein the controller (120) is configured to perform said desulfation method based on the provided signal (Sw) when the motor vehicle is at stand-still with the at least one lead-acid battery (1) kept installed onboard of the motor vehicle.

13. The system (100) of any of claims 8-12, wherein the at least one power source (110) forms or is part of a first power network installed onboard of the motor vehicle, the first power network providing DC electric current at a first predetermined voltage suitable for being used at least for traction of the motor vehicle.

14. The system (100) of claim 13, wherein the at least one lead-acid battery (1) forms or is part of a second power network installed onboard of the motor vehicle, the second power network providing DC electric current at a second predetermined voltage which is lower than said first predetermined voltage and is suitable for supplying one or more power consumers (120; 170) installed onboard of the motor vehicle, and wherein the system (100) further comprises at least one DC/DC converter (140) which converts the DC electric current provided by the first power network into DC electric current having a lower voltage suitable for being applied to the at least one lead acid battery (1).

15. An electric motor vehicle comprising:
- one or more lead-acid batteries (1); and
- a system (100) for at least partially desulfating at least one of said one or more lead-acid batteries (1) according to any of claims 8-14.

## Patentansprüche

1. Desulfatierungsverfahren, um mindestens eine Bleisäurebatterie (1) zumindest teilweise zu desulfatisieren, umfassend ein Anlegen, an die mindestens eine Bleisäurebatterie (1), einer Reihe von Stromimpulsen, die durch positive Stromimpulse abwechselnd mit negativen Stromimpulsen gebildet sind, wobei die abwechselnd positiven und negativen Stromimpulse mit einer Trennzeit (T) zwischen aufeinanderfolgenden Impulsen angelegt werden, die unter einer vordefinierten Zeit ist.

2. Desulfatierungsverfahren nach Anspruch 1, wobei die Trennzeit (T) zwischen aufeinanderfolgenden Stromimpulsen selektiv einstellbar ist.

3. Desulfatierungsverfahren nach einem der Ansprüche 1-2, wobei die abwechselnden negativen und positiven Stromimpulse kontinuierlich an die mindestens eine Bleisäurebatterie (1) angelegt werden und die Trennzeit (T) zwischen aufeinanderfolgenden Impulsen gleich Null gesetzt ist.

4. Desulfatierungsverfahren nach einem der Ansprüche 1-3, wobei die Dauer eines oder mehrerer positiver und/oder negativer Stromimpulse der Reihe von Stromimpulsen eingestellt wird.

5. Desulfatierungsverfahren nach einem der Ansprüche 1-4, wobei die Dauer mindestens eines positiven und/oder negativen Stromimpulses der Reihe von Stromimpulsen von der Dauer der anderen positiven und/oder negativen Stromimpulse der Reihe von Stromimpulsen verschieden ist.

6. Desulfatierungsverfahren nach einem der Ansprüche 1-5, umfassend ein Einstellen des maximalen Stromwerts (Iₘₐₓ) eines oder mehrerer positiver und/oder negativer Stromimpulse (P+; P-) der Reihe von Stromimpulsen.

7. Desulfatierungsverfahren nach einem der Ansprüche 1-6, wobei die positiven Stromimpulse (P+) im Wesentlichen denselben maximalen absoluten Stromwert (I_{maxP+}) und/oder die negativen Stromimpulse (P-) im Wesentlichen denselben maximalen absoluten Stromwert (I_{maxP}) aufweisen.

8. System (100) zum zumindest teilweisen Desulfatisieren mindestens einer Bleisäurebatterie (1), umfassend mindestens:
- mindestens eine Stromquelle (110), die geeignet ist, elektrischen Strom bereitzustellen;
- eine Steuerung (120), die konfiguriert ist, um ein Desulfatierungsverfahren nach einem der Ansprüche 1-7 unter Verwendung von elektrischem Strom durchzuführen, der von mindestens einer Energiequelle (110) bereitgestellt wird.

9. System (100) nach Anspruch 8, wobei die mindestens eine Bleisäurebatterie (1) eine Kraftfahrzeugbatterie ist und die Steuerung (120) konfiguriert ist, um das Desulfatierungsverfahren nach einem vorbestimmten Zeitplan durchzuführen.

10. System (100) nach Anspruch 9, wobei die Steuerung (120) konfiguriert ist, um das Desulfatierungsverfahren nach einem vorbestimmten Zeitplan durchzuführen, wenn das Kraftfahrzeug in Stillstand ist und die mindestens eine Bleisäurebatterie (1) an Bord des Kraftfahrzeugs installiert bleibt.

11. System (100) nach Anspruch 8, wobei die mindestens eine Bleisäurebatterie (1) eine Batterie eines Kraftfahrzeugs ist und die Steuerung (120) konfiguriert ist, um das Desulfatierungsverfahren basierend auf einem von einem Sensor (2) bereitgestellten Signal (Sw) durchzuführen, das angibt, dass ein aktueller Gesundheitszustand (SOH) der mindestens einer Bleisäurebatterie (1) unter einem vorbestimmten Schwellenwert ist.

12. System (100) nach Anspruch 11, wobei die Steuerung (120) konfiguriert ist, um das Desulfatierungsverfahren basierend auf dem bereitgestellten Signal (Sw) durchzuführen, wenn das Kraftfahrzeug in Stillstand ist und die mindestens eine Bleisäurebatterie (1) an Bord des Kraftfahrzeugs installiert bleibt.

13. System (100) nach einem der Ansprüche 8 bis 12, wobei die mindestens eine Stromquelle (110) ein erstes an Bord des Kraftfahrzeugs installiertes Stromnetz bildet oder Teil davon ist, das elektrischen Gleichstrom mit einer ersten vorbestimmten Spannung bereitstellt, die geeignet ist, um zumindest für den Antrieb des Kraftfahrzeugs verwendet zu werden.

14. System (100) nach Anspruch 13, wobei die mindestens eine Bleisäurebatterie (1) ein zweites, an Bord des Kraftfahrzeugs installiertes Stromnetz bildet oder Teil davon ist, wobei das zweite Stromnetz elektrischen Gleichstrom mit einer zweiten vorbestimmten Spannung bereitstellt, die niedriger ist als die erste vorbestimmte Spannung und zur Versorgung eines oder mehrerer an Bord installierter Stromverbraucher (120; 170) geeignet ist, und wobei das System (100) ferner mindestens einen DC/DC-Wandler (140) umfasst, der den vom ersten Stromnetz bereitgestellten elektrischen Gleichstrom in elektrischen Gleichstrom mit einer niedrigeren Spannung umwandelt, die geeignet ist, um an die mindestens eine Bleisäurebatterie (1) angelegt zu werden.

15. Elektrisches Kraftfahrzeug, umfassend:
- eine oder mehrere Bleisäurebatterien (1); und
- ein System (100) zum zumindest teilweisen Desulfatisieren von mindestens einer der einen oder der mehreren Bleisäurebatterien (1) nach einem der Ansprüche 8-14.

## Revendications

1. Procédé de désulfatation pour désulfater au moins partiellement au moins une batterie au plomb-acide (1), comprenant l'application à l'au moins une batterie au plomb-acide (1) d'une série d'impulsions de courant formées par des impulsions de courant positives alternant avec des impulsions de courant négatives, dans lequel les impulsions de courant positives et négatives alternées sont appliquées à la batterie au plomb-acide avec un temps de séparation (T) entre les impulsions consécutives qui est inférieur à un temps prédéfini.

2. Procédé de désulfatation selon la revendication 1, dans lequel le temps de séparation (T) entre les impulsions de courant consécutives est réglable de manière sélective.

3. Procédé de désulfatation selon l'une quelconque des revendications 1 et 2, dans lequel les impulsions de courant négatives et positives alternées sont appliquées en continu à l'au moins une batterie au plomb-acide (1), le temps de séparation (T) entre les impulsions consécutives étant défini comme égal à zéro.

4. Procédé de désulfatation selon l'une quelconque des revendications 1 à 3, comprenant le réglage de la durée d'une ou plusieurs impulsions de courant positives et/ou négatives de la série d'impulsions de courant.

5. Procédé de désulfatation selon l'une quelconque des revendications 1 à 4, dans lequel la durée d'au moins une impulsion de courant positive et/ou négative de la série d'impulsions de courant est différente de la durée des autres impulsions de courant positives et/ou négatives de la série d'impulsions de courant.

6. Procédé de désulfatation selon l'une quelconque des revendications 1 à 5, comprenant le réglage de la valeur de courant maximale (Iₘₐₓ) d'une ou plusieurs impulsions de courant positives et/ou négatives (P+ ; P-) de la série d'impulsions de courant.

7. Procédé de désulfatation selon l'une quelconque des revendications 1 à 6, dans lequel les impulsions de courant positives (P+) ont sensiblement la même valeur absolue de courant maximale (I_{maxP+}) et/ou les impulsions de courant négatives (P-) ont sensiblement la même valeur absolue de courant maximale (I_{maxP}).

8. Système (100) pour désulfater au moins partiellement au moins une batterie au plomb-acide (1), comprenant au moins :
- au moins une source d'énergie (110) apte à fournir du courant électrique ;
- un contrôleur (120) qui est configuré pour réaliser un procédé de désulfatation selon l'une quelconque des revendications 1 à 7 utilisant le courant électrique fourni par l'au moins une source d'énergie (110).

9. Système (100) selon la revendication 8, dans lequel l'au moins une batterie au plomb-acide (1) est une batterie d'un véhicule à moteur et le contrôleur (120) est configuré pour réaliser ledit procédé de désulfatation selon un programme prédéterminé.

10. Système (100) selon la revendication 9, dans lequel le contrôleur (120) est configuré pour réaliser ledit procédé de désulfatation selon un programme prédéterminé lorsque le véhicule à moteur est à l'arrêt et qu'au moins une batterie au plomb-acide (1) est maintenue installée à bord du véhicule à moteur.

11. Système (100) selon la revendication 8, dans lequel l'au moins une batterie au plomb-acide (1) est une batterie de véhicule à moteur et le contrôleur (120) est configuré pour réaliser ledit procédé de désulfatation sur la base d'un signal (Sw) fourni par un capteur (2) indiquant qu'un état de santé, SOH, actuel de l'au moins une batterie au plomb-acide (1) est en dessous d'un seuil prédéterminé.

12. Système (100) selon la revendication 11, dans lequel le contrôleur (120) est configuré pour réalise ledit procédé de désulfatation sur la base du signal (Sw) fourni lorsque le véhicule à moteur est à l'arrêt et que l'au moins une batterie au plomb-acide (1) est maintenue installée à bord du véhicule à moteur.

13. Système (100) selon l'une quelconque des revendications 8 à 12, dans lequel l'au moins une source d'énergie (110) forme ou fait partie d'un premier réseau électrique installé à bord du véhicule à moteur, le premier réseau électrique fournissant un courant électrique CC à une première tension prédéterminée approprié pour être utilisé au moins pour la traction du véhicule à moteur.

14. Système (100) selon la revendication 13, dans lequel l'au moins une batterie au plomb-acide (1) forme ou fait partie d'un second réseau électrique installé à bord du véhicule à moteur, le second réseau électrique fournissant un courant électrique DC à une seconde tension prédéterminée qui est inférieure à ladite première tension prédéterminée et est approprié pour alimenter un ou plusieurs consommateurs d'énergie (120 ; 170) installés à bord du véhicule à moteur, et dans lequel le système (100) comprend en outre au moins un convertisseur DC/DC (140) qui convertit le courant électrique DC fourni par le premier réseau électrique en un courant électrique DC ayant une tension inférieure approprié pour être appliqué à l'au moins une batterie au plomb-acide (1).

15. Véhicule à moteur électrique comprenant :
- une ou plusieurs batteries au plomb-acide (1) ; et
- un système (100) pour désulfater au moins partiellement au moins une desdites une ou plusieurs batteries au plomb-acide (1) selon l'une quelconque des revendications 8 à 14.
